# EUROPÄISCHE PATENTANMELDUNG

(11) **EP 0 784 404 A2**
(43) Veröffentlichungstag der Anmeldung: **16.07.1997**
(21) Anmeldenummer: 97100361.1
(22) Anmeldetag: 10.01.1997
(51) Int. Cl.: H04N 7/10

(54) **Kabel-Fernseh-Verteilnetz mit wenigstens einem Koaxialkabelabschnitt und wenigstens einem Glasfaserkabelabschnitt und zusätzlichem Anschluss von Endgeräten eines Fernmeldenetzes**

(30) Priorität: 12.01.1996 DE 19600961
(71) Anmelder: SIEMENS AKTIENGESELLSCHAFT, 80333 München (DE)
(72) Erfinder: Mahner, Helmut, Dipl.-Ing., 82049 Pullach (DE); Schaaf, Anton, 2614 GP Delft (NL)

(57) **Zusammenfassung**

Kabel-Fernseh-Verteilnetz mit wenigstens einem Koaxialka-belabschnitt und wenigstens einem Glasfaserkabelabschnitt und zusätzlichem Anschluß von Endgeräten eines Fernmeldenetzes

Der zum Teilnehmer hin letzte Kabelabschnitt ist ein Koaxial-kabelabschnitt (1). Für die Übertragung der Signale von und zu den Fernmeldeendgeräten (TLST) auf diesem Abschnitt wird ein unterhalb des Fernsehübertragungsbandes liegender Frequenzbereich ausgenutzt, der reziprok nutzbar gemacht ist.

## Beschreibung

Kabel-Fernseh-Verteilnetz mit wenigstens einem Koaxialkabelabschnitt und wenigstens einem Glasfaserkabelabschnitt und zusätzlichem Anschluß von Endgeräten eines Fernmeldenetzes

Die Erfindung betrifft ein Kabel-Fernseh-Verteilnetz, das wenigstens einen Glasfaserkabelabschnitt und wenigstens einen Koaxialkabelabschnitt aufweist, wobei der zum Teilnehmer hin letzte Abschnitt ein Koaxialkabelabschnitt ist, und das zum Anschluß von Endgeräten eines Fernmeldenetzes mitausgenutzt wird.

Die Mitausnutzung eines Kabel-Fernseh-Verteilnetzes für die Übertragung von Signalen, die für Fernmelde-Endgeräte, wie Fernsprechendgeräte und Endgeräte eines ISDN-Teilnehmeranschlusses bestimmt sind, ist insbesondere dann von Interesse, wenn schon ein Kabel-Fernseh-Verteilnetz existiert und der Betreiber dieses Netzes auch Fernmeldedienste anbieten möchte, eine Situation, die aufgrund der Deregulierung des Fernsprechmarktes häufig gegeben sein wird.

Es ist in diesem Zusammenhang schon vorgeschlagen worden, auf den zum Teilnehmer hin letzten Koaxialkabelabschnitt für die Übertragung der Fernmeldesignale in Hin- und Rückrichtung getrennte Frequenzbänder vorzusehen, wobei für die Verstärkung des oberen Frequenzbandes, die der Übertragung in Richtung zum Teilnehmer hin dient, die für die Verstärkung der Fernsehsignale vorgesehenen Verstärker mitausgenutzt wurden, wogegen in der Übertragungsrichtung zur Vermittlungsstelle hin in dem tieferen Frequenzbereich gesonderte Verstärker vorgesehen waren. Wenn in diesem Zusammenhang für jedes Fernmeldeteilnehmerendgerät ein geeigneter Sender und Empfänger für die beiden ausgenutzten Frequenzbänder vorgesehen wird, stellt dies eine sehr kostspielige Lösung dar. Es könnte zwar stattdessen vorgesehen sein,einen Sender/Empfänger teilzentral für eine Mehrzahl von Teilnehmern vorzusehen, wozu jedoch vom Ort dieses Sender/Empfängers bis zu den Endgeräten teilnehmerindividuelle Leitungen zu installieren wären, was allerdings dem Bestreben nach Vollnutzung des existierenden Fernsehverteilnetzes widerspricht. Hinzu kommt, daß ein Kanalmanagement, das die Ausbreitungs- und Störungsverhältnisse auf zwei zusammengehörigen aber weit auseinanderliegenden Frequenzen auswertet, einen relativ aufwendigen Signalisierungsverkehr zwischen teilnehmerseitigen und amtsseitigen Einrichtungen erfordert.

Wenn gemäß einem anderen Vorschlag die Auskopplung der Fernmeldesignale an einem Hausanschlußpunkt des Koaxialkabelabschnittes erfolgt und als letzter Abschnitt zum Teilnehmergerät hin ein Funk-Anschlußsystem installiert wird, können abgesehen von den ebenfalls nicht geringen Kosten eines solchen Funk-Anschlußsystems noch andere Probleme entstehen, die in der möglicherweise nicht ausreichenden Funkreichweite wegen baulicher Gegebenheiten des Gebäudes, der Möglichkeit der Störung benachbarter Funksysteme sowie in Schwierigkeiten bei der Erteilung von Funklizenzen und Frequenzzuweisungen liegen.

Die Aufgabe der Erfindung besteht darin, eine demgegenüber kostengünstigere Möglichkeit der Mitnutzung eines Kabel-Fernseh-Verteilnetzes mit Koaxialkabel und Glasfaserkabelabschnitten für die Übertragung von Fernmeldeinformationen anzugeben.

Diese Aufgabe wird mittels der im Kennzeichen des Patentanspruches 1 angegebenen Merkmale gelöst.

Es wird demnach für die Übertragung der Signale von und zu den Endgeräten des Fernmeldenetzes ein unterhalb des der Fernsehsignalübertragung dienenden Frequenzbandes liegender und hierfür reziprok nutzbar gemachter Frequenzbereich herangezogen, wobei die Übertragung zur selben Verbindung gehörender Signale der Hin- und Rückrichtung in verschiedenen Zeitabschnitten erfolgt.

Im verwendeten unteren Frequenzband sind die Kabeldämpfungen am geringsten, so daß gegebenenfalls auf eine Verstärkung der Fernmeldesignale verzichtet werden kann mit der Folge, daß ein reziproker Betrieb sich einfach dadurch herstellen läßt, daß in diesem Frequenzbereich die für die Fernsehsignale installierten Verstärker lediglich überbrückt zu werden brauchen. Die Übertragung von zur selben Verbindung gehörender Signale der Hin- und Rückrichtung in verschiedenen Zeitabschnitten, also die Anwendung des sogenannten Time-Division-Duplex-Betriebs (TDD) auf die Fernmeldeinformationen führt dazu, daß auf der Teilnehmerseite derart geringer Zusatzaufwand zu treiben ist, daß die entsprechenden Änderungen und Ergänzungen teilnehmerindividuell vorgenommen werden können, also der Koaxialabschnitt bis zum Teilnehmer hin geführt werden kann und eine Verteilung von einem teilzentralen Punkt aus über ein Funksystem oder über teilnehmerindividuelle Leitungen entfällt.

Weitere Ausgestaltungen der Erfindung sind Gegenstand von Unteransprüchen.

Anspruch 2 betrifft die schon erwähnte Art, wie der Koaxialkabelabschnitt im für den Fernmeldeverkehr vorgesehenen Frequenzbereich reziprok gemacht wird.

Gemäß Anspruch 3 kann in diesem Zusammenhang auch ein Zweiwegverstärker in Frage kommen, was dann der Fall sein wird, wenn wegen großer Längen des teilnehmerseitigen Koaxialkabelabschnittes auf eine Verstärkung nicht verzichtet werden kann.

Im Anspruch 4 ist angegeben, wie in zweckmäßiger Weise die Ein- und Auskopplung der Fernmeldesignale am teilnehmerseitigen und am vermittlungsseitigen Ende des teilnehmerseitigen Koaxialkabelabschnittes bzw. an gegebenenfalls vorhandenen weiteren Übergangsstellen zwischen Koaxialkabelabschnitten und Glasfaserabschnitten vorgenommen werden kann.

Gemäß den Ansprüchen 5 und 6 werden Protokollarchitekturen eines Mobilfunk- oder Schnurlos-Systems bzw. speziell eine DECT-Architektur als Architektur für ein Schnurlos-System vorgeschlagen, obwohl ein Funkbetrieb nicht vorgesehen ist. Es kann somit auf eine schon existierende Steuerungs- und Geräteinfrastruktur zurückgegriffen werden. Ferner ist es hierdurch möglich, dem leitungsgebundenen Fernmeldeverkehr bisher im Funkbereich zum Tragen kommende Möglichkeiten zu bieten, wie die Zuweisung von mehr als einem Übertragungskanal pro Teilnehmerverbindung oder den Wechsel von einem gestörten Kanal zu einem ungestörten Kanal im Zuge einer bestehenden Fernmeldeverbindung.

Gemäß Anspruch 7 ist angegeben, wie in zweckmäßiger Weise der Anschluß eines Schnurlos-Fernsprechendgerätes als Fernsprechendgerät erfolgen kann.

Die Ansprüche 8 und 9 betreffen einen Vorschlag, wie ein Kabel-Fernseh-Verteilnetz zusätzlich für die Versorgung von mobilen Teilnehmerendgeräten genutzt werden kann.

Nachstehend wird die Erfindung anhand eines Ausführungsbeispiels unter Bezugnahme auf eine Figur näher erläutert.

Zunächst wir dabei auf die Bestandteile eines Kabel-Fernseh-Verteilnetzes eingegangen. Hierzu gehören ein Knoten VN, dem in nicht dargestellter Weise die zu verteilenden Fernsehsignale von einer zentralen Stelle aus zugeführt werden. Ferner eine Kabelstrecke, die diesen Knoten VN mit einem Gebäude G verbindet, in dem sich der Fernsehempfänger TV für die zu verteilenden Fernsehsignale befindet.

Die Anschlußkabelstrecke besteht im dargestellten Fall aus einem Glasfaserkabelabschnitt 2 und einem bis an die teilnehmerseitige Steckdose 4 im Gebäude G reichenden Koaxialkabelabschnitt 1. An der Verbindungsstelle zwischen Glasfaserabschnitt und Koaxialkabelabschnitt ist eine Einrichtung F angeordnet, die in erster Linie der Umwandlung der auf dem Glasfaserabschnitt übertragenen Signale in Signale für die Übertragung auf dem Koaxialkabelabschnitt und umgekehrt dient.

Der Koaxialkabelabschnitt 1 enthält einen Verstärker 6.

Das insoweit beschriebene Kabel-Fernseh-Verteilnetz soll entsprechend den erfindungsgemäßen Merkmalen für den Anschluß von Endgeräten eines Fernmeldenetzes an eine Fernmeldevermittlungsstelle mitausgenutzt werden.

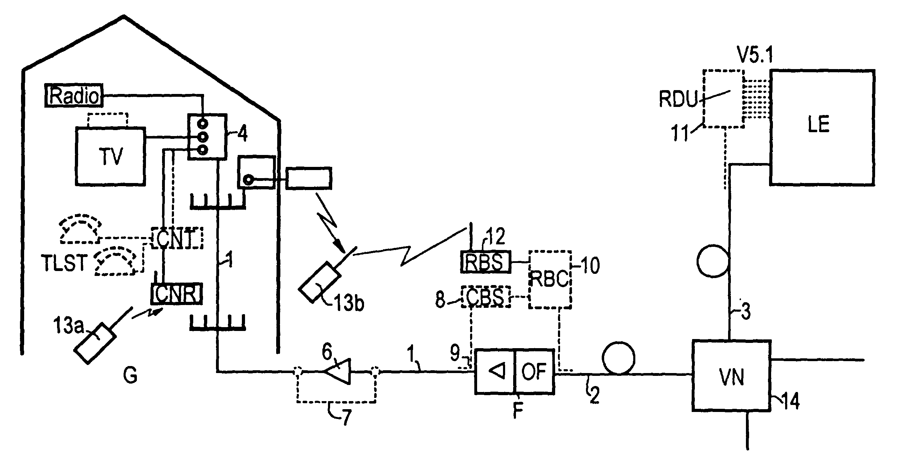

Eine solche Fernmeldevermittlungsstelle ist in der Figur mit LE bezeichnet, sie steht beispielsweise über einen Glasfaserkabelabschnitt 3 mit dem erwähnten Knoten VN in Verbindung. Als Fernmeldeendgeräte sind hier Fernsprechgeräte TLST angedeutet, es kann sich jedoch auch um multifunktionale Endgeräte eines ISDN-Teilnehmeranschlusses handeln. Diese Endgeräte werden an ein Netzabschlußgerät CNT angeschlossen, das die standardmäßige Endgeräteschnittstelle für Fernsprechendgeräte, also für einen a/b-Ader-Anschluß oder für einen ISDN-Basisanschluß zur Verfügung stellt.

Am vermittlungsseitigen Ende des Koaxialkabel-Abschnitts ist ein Netzabschlußgerät CBS vorgesehen, das der Signalwandlung der auf dem Koaxialkabelabschnitt auftretenden Fernmeldesignale in für die Übertragung auf die Glasfaserkabelabschnitt zu übertragenden Signale und umgekehrt dient.

Erfindungsgemäß erfolgt die Übertragung der Signale von und zu den Endgeräten TLST in einem unterhalb der Fernsehsignalübertragungsfrequenz liegenden Frequenzband, das im dargestellten Fall dadurch reziprok gemacht ist, daß der der Verstärkung der Fernsehsignale dienende Verstärker 6 für diesen unteren Frequenzbereich überbrückt ist. Bei Bedarf kann jedoch stattdessen auch ein für diesen Frequenzbereich wirkender Zweirichtungsverstärker, beispielsweise unter Verwendung von eine negative Kennlinie aufweisenden Verstärkerelementen vorgesehen sein.

Die Übertragung der Fernmeldesignale der Hin- und Rückrichtung erfolgt auf dem Koaxialkabelabschnitt 1 in verschiedenen Zeitabschnitten, also nach dem sogenannten Zeitlagegetrenntverfahren bzw. Time-Division-Duplex-Verfahren (TDD). Es sind hierzu in dem genannten Frequenzbereich Frequenz- und/oder Zeitmultiplexkanäle gebildet.

Wenn gemäß weiterer Ausgestaltung der Erfindung für die Übertragung der Fernmeldesignale die Protokollarchitektur eines Mobilfunk- oder Schnurlos-Systems, insbesondere die Protokollarchitektur des DECT-Protokolls für Schnurlostelefone verwendet wird, dann entsprechen das Netzabschlußgerät CNT sowie das Übertragungsgerät CBS dem Funkteilnehmerabschluß, dort üblicherweise als Radio Network Termination (RNT) bezeichnet, bzw. einer Funkbasisstation (RBS), zwischen denen die Luftschnittstelle des Funksystems bei einem Schnurlostelefonanschluß besteht.

Es stehen dann auch Besonderheiten eines Schnurlostelefonanschlusses zur Verfügung, die in der Möglichkeit einer beliebigen Kanalauswahl, der Verwendung von mehr als einem Kanal für ein und dieselbe Verbindung sowie in einem Kanalwechsel während einer bestehenden Verbindung wegen schlechter gewordenen Übertragungsbedingungen liegen.

Wenn als Fernsprechendgerät anstelle eines üblichen drahtgebundenen Fernsprechendgerätes TLST ein Schnurlosendgerät 13a angeschlossen werden soll, dann ist das erwähnte Netzabschlußgerät CNT in Form eines an die für den Fernmeldeverkehr auf dem Koaxialkabelabschnitt 1 verwendeten Frequenzen angepaßten Repeaters CNR(a) realisiert, der die für das Koaxialkabel empfangenen Signale gemäß dem Protokoll des Schnurlos-systems drahtlos wieder aussendet bzw. vom Schnurlos-Endgerät empfangene Signale in den Koaxialkabelabschnitt einspeist.

Sofern beim selben Teilnehmer außer dem Schnurlos-Endgerät drahtgebundene Fernsprechendgeräte vorhanden sind, wird der erwähnte Repeater CNR(a) zusätzlich zu dem Netzabschlußgerät CNT für die drahtgebundenen Fernsprechendgeräte TLST vorhanden sein. Gegenüber dem zusätzlichen Anschluß der Basisstation des Schnurlos-Endgerätes an das Netzabschlußgerät CNT hat dies den Vorteil, daß die gemäß dem Schnurlosprotokoll in der Basisstation des Schnurlos-Endgerätes und in dem Netzabschlußgerät CNT vorgenommenen Umwandlungsprozeduren für das Schnurlos-Endgerät nicht zweimal nacheinander abgewickelt werden müssen, was abgesehen von überflüssigem Aufwand zu längeren Laufzeiten führen würde.

Für den zusätzlichen Anschluß von mobilen Endgeräten 13(b), die sich im Außenbereich außerhalb des Gebäudes G befinden, sind gemäß weiterer Ausgestaltungen der Erfindung zwei Varianten vorgesehen, die alternativ oder gemeinsam zur Anwendung kommen können.

Gemäß der einen Variante ist am teilnehmerseitigen Ende des Koaxialkabelabschnittes 1 an einer weiteren Steckdose 4a ein weiterer an die auf dem Koaxialkabelabschnitt 1 verwendeten Frequenzen angepaßter Repeater CNR(b) vorgesehen, der die über den Koaxialkabelabschnitt 1 empfangenen Signale nach dem Standard des Schnurlossystems über eine Antenne aussendet bzw. von dem im Außenbereich befindlichen mobilen Endgerät 13a kommende Funksignale aufnimmt und in den Koaxialkabelabschnitt einkoppelt, wobei er auch eine Anpassung an die auf dem Koaxialkabel für den Fernmeldeverkehr verwendeten Frequenzen vornimmt.

Gemäß der zweiten Alternative ist am netzseitigen Ende des Koaxialkabelabschnittes 1 in Entsprechung des vorerwähnten Netzabschlußgeräts CBS für die über den Kabelabschnitt übertragenen Fernmeldesignale eine Funkbasisstation RBS eines Schnurlossystems an den Glasfaserkabelabschnitt 2 angeschlossen, so daß für den Fernmeldeverkehr zwischen im Funkbereich der Funkbasisstation RBS befindliche mobile Teilnehmergeräte 13b und der Vermittlungsstelle LE die Glasfaserkabelabschnitte 2 und 3 mitausgenutzt werden. Der Fernmeldeverkehr gemäß dieser Alternative ist unabhängig davon, ob der Koaxialkabelabschnitt für die Abwicklung von Fernmeldeverkehr mitausgenutzt wird oder nicht.

Die Schnittstelle für gemäß dem Schnurlosstandard, insbesondere gemäß dem DECT-Standard übertragene Fernsprechinformationen zwischen dem Glasfaserkabelabschnitt 3 und der Fernmeldevermittlungsstelle LE ist durch eine Funksteuereinheit RDU realisiert, die über eine Leitungsschnittstelle, z.B. V5.1, und eine Anzahl von Kupferleitungen mit der Vermittlungsstelle LE in Verbindung steht. Die Einheit RDU ist zusammen mit den erwähnten Einheiten CNT, CNR, CBS und gegebenenfalls RBS für die Abwicklung der dem Fernmeldeverkehr zugrundeliegenden Protokolle verantwortlich. Dabei kannes zweckmäßig sein einen Teil der Signalverarbeitung für mehrere Einheiten CBS und gegebenenfalls RBS in einem getrennten Gerät RBC zusammenzufassen, wie dies im Bild dargestellt ist.

## Patentansprüche

1. Kabel-Fernsehverteilnetz, das wenigstens einen Glasfaserkabelabschnitt und wenigstens einen Koaxialkabel abschnitt aufweist, wobei der zum Teilnehmer hin letzte Abschnitt ein Koaxialkabelabschnitt ist, und das zum Anschluß von Endgeräten eines Fernmeldenetzes mitausgenutzt wird,
**dadurch gekennzeichnet,** daß
für die Übertragung der Signale von und zu den Endgeräten (TLST) des Fernmeldenetzes auf dem genannten Koaxialkabelabschnitt (1) ein unterhalb des der Fernsehsignalübertragung dienenden Frequenzbandes liegender und hierfür reziprok nutzbar gemachter Frequenzbereich herangezogen wird, in dem Frequenz-und/oder Zeitmultiplexkanäle für die Übertragung von Digitalsignlen gebildet sind, wobei die Übertragung zur selben Verbindung gehörender Signale der Hin- und Rückrichtung in verschiedenen Zeitabschnitten erfolgt.

2. Verteilnetz nach Anspruch 1,
**dadurch gekennzeichnet,** daß
der Frequenzbereich für die Übertragung der Signale des Fernmeldenetzes dadurch reziprok nutzbar gemacht ist, daß in dem genannten wenigstens einen Koaxialkabelabschnitt (1) eingefügte Verstärker (6) zur Verstärkung der Fernsehsignale für diesen Frequenzbereich durch eine Frequenzweiche (7) überbrückt sind.

3. Verteilnetz nach Anspruch 1
**dadurch gekennzeichnet,** daß
der Frequenzbereich für die Übertragung der Signale des Fernmeldenetzes dadurch reziprok nutzbar gemacht sind, daß die in den wenigstens einen Koaxialkabelabschnitt eingefügten, in erster Linie der Verstärkung der Fernsehsignale dienenden Verstärkeranordnungen für diesen Frequenzbereich als Zweiwegverstäker ausgebildet sind.

4. Verteilnetz nach einem der Ansprüche, 1 bis 3
**dadurch gekennzeichnet,** daß
am teilnehmerseitigen Ende des zum Teilnehmer hin letzten Koaxialkabelabschnittes (1) die im genannnten untersten Frequenzbereich übertragenen Signale des Fernmeldenetzes über eine Frequenzweiche (4) ausgekoppelt und einem Netzabschlußgerät (CNT) zugeführt werden, das eine übliche Schnittstelle für die Teilnehmerendgeräte des Fernsprechnetzes bildet, und daß am netzseitigen Ende dieses Koaxialkabelabschnittes (1) ebenfalls eine Auskopplung der im unteren Frequenzbereich übertragenen Signale des Fernsprechnetzes über eine Frequenzweiche (9) erfolgt und diese einem Netzabschlußgerät (CBS) zugeführt werden, das die bereitgestellten Kanäle moduliert bzw. demoduliert und in eine Signalform bringt, die sich für die Übertragung über den angrenzenden Glasfaserkabelabschnitt (2) sowie weitere gegebenfalls vorhandene zwischen Glasfaserkabelabschnitten angeordnete Koaxialkabelabschnitte eignet.

5. Verteilnetz nach einem der Ansprüche 1 bis 4,
**dadurch gekennzeichnet**, daß
zumindest auf dem genannten Koaxialkabelabschnitt (1) die Protokollarchitektur eines Mobilfunk-oder Schnurlos-Systems benutzt wird.

6. Verteilnetznetz nach Anspruch 5,
**dadurch gekennzeichnet,** daß
die Protokollarchitektur eine DECT-Architektur ist.

7. Verteilnetz nach Anspruch 4 und einem der Ansprüche 5 oder 6,
**dadurch gekennzeichnet,** daß
für den Anschluß eines Schnurlosendgerätes (13a) das Netzabschlußgerät in Form eines an die für den Fernmeldeverkehr auf dem genannten Koaxialkabelabschnitt (1) verwendeten Frequenzen angepaßten Repeaters (CNR(a)) realisiert ist, der die über das Koaxialkabel empfangenen Signale gemäß dem Protokoll des Schnurlossystems drahtlos wiederaussendet bzw. vom Schnurlos-Endgerät (13b) empfangene Signale in das genannte Kabel (1) einspeist.

8. Verteilnetz nach einem der vorhergehenden Ansprüche,
**dadurch gekennzeichnet,** daß
am teilnehmerseitgen Ende des genannten Koaxilakabelabschnittes (1) zur Anbindung von im Außenbereich befindlichen mobilen Teilnehmern ein weiteres Netzabschlußgerät in Form eines an die für den Fernmeldeverkehr auf dem genannten Koaxialkabelabschnitt (1) verwendeten Frequenzen angepaßten Repeaters (CNR(b)) vorgesehen ist, der über den Koaxialkabelabschnitt empfangene Signale nach dem Standard des Schnurlossystems drahtlos aussendet bzw. von Endgeräten (13a) der weiteren mobilen Teilnehmer kommende Funksignale in das Koaxilkabel einkoppelt.

9. Verteilnetz nach einem der Ansprüche 5 bis 8,
**dadurch gekennzeichnet,** daß zur Anbindung von im Außenbereich befindlichen mobilen Teilnehmern am netzseitigen Ende des genannten Koaxialkabelabschnitts (1) in Entsprechung des Übertragungsgeräts (CBS) für die über den Kabelabschnitt übertragenen Fernmeldesignale wenigsten eine Funkbasisstation (RBS) eines Schnurlossystems an den angrenzenden Glasfaserkabelabschnitt angeschlossen ist, durch das über den Glasfaserkabelabschnitt empfangene Signale drahtlos ausgesendet bzw. von den Endgeräten (13b) der mobilen Teilnehmer kommende Signale in den Glasfaserkabelabschnitt eingekoppelt werden.
